# EUROPÄISCHE PATENTSCHRIFT

(11) **EP 1 862 531 B1**
(45) Veröffentlichungstag und Bekanntmachung des Hinweises auf die Patenterteilung: **27.08.2008**
(21) Anmeldenummer: 06010673.9
(22) Anmeldetag: 23.05.2006
(51) Int. Cl.: C12C 7/22, C12C 13/02

(54) **Wuerzepfanne mit Aussenkocher**
Wort pan with external cooker
Chaudière à moût avec chaudière externe

(43) Veröffentlichungstag der Anmeldung: 05.12.2007
(73) Patentinhaber: KRONES Aktiengesellschaft, 93073 Neutraubling (DE)
(72) Erfinder: Lohner, Dietmar, 85354 Freising (DE); Wetzl, Christian, 85410 Haag a.d. A. (DE); Gruber, Robert, 84072 Abends/Gemeinde Au (DE)
(74) Vertreter: Grünecker, Kinkeldey, Stockmair & Schwanhäusser Anwaltssozietät

(56) Entgegenhaltungen:
- WO-A-20/04092321
- DE-A1- 2 535 120
- DE-A1- 19 634 010
- GB-A- 1 383 330

## Beschreibung

Die Erfindung betrifft eine Würzepfanne mit Außenkocher sowie ein Verfahren zum Würzekochen

Aus der GB-A-1383330 ist bereits eine Würzepfanne mit Außenkocher bekannt, wobei erhitzte Würze in einem Steigrohr aufsteigt.

Aus der DE OS 2535120 ist bereits eine Würzepfanne mit Innenkocher bekannt.

Ein wesentlicher Prozess bei der Bierherstellung ist der Sudhausprozess zur Gewinnung von Würze. Dabei muss die vom Läuterbottich gewonnene Würze gekocht werden, wobei bittere und aromatische Bestandteile des Hopfens in die Würze überführt und gleichzeitig Eiweißstoffe sowie nicht erwünschte aromatische flüchtige Bestandteile, beispielsweise DMS (Dimethylsulfid) ausgeschieden bzw. ausgedampft werden können.

Das Würzekochen erfolgt in einer Würzepfanne. Grundsätzlich gibt es Würzepfannen mit Innenkocher sowie Würzepfannen mit Außenkocher. Bei den Würzepfannen mit Innenkocher befindet sich der Kocher in der Würzepfanne. Der Innenkocher ist dabei beispielsweise ein in der Würzepfanne stehender Rohrbündelwärmetauscher, durch dessen senkrecht angeordnete Rohre die Würze emporsteigt.

Bei Würzepfannen mit Außenkochung wird die Würze über einen außerhalb der Pfanne angeordneten Außenkocher erhitzt. Dabei wird die Würze ständig aus dem Unterteil der Würzepfanne abgezogen und beispielsweise mittels einer Pumpe durch den Außenkocher gepumpt und erneut der Pfanne zugeführt. Bei der Rückführung in die Pfanne entspannt sich die Würze. Dabei kommt es zu einer erwünschten kräftigen Ausdampfung. Als Außenkocher werden auch hier zumeist Rohrbündelwärmetauscher oder aber Plattenwärmeübertrager verwendet. Außenkocher weisen im Gegensatz zu den Innenkochern eine Reihe von Vorteilen auf. Die Würzeaustrittstemperatur und Umwälzmenge kann genau geregelt werden. Die benötigte Heizfläche bzw. die Dimensionierung des Außenkochers ist frei wählbar und nicht durch die Größe der Pfanne begrenzt. Die Größe der Würzepfanne kann daher reduziert werden.

Dennoch bringt die Würzpfanne mit Außenkocher den Nachteil mit sich, dass der Würzevorrat in der Würzepfanne nicht ausreichend zirkuliert. Zwar ist beispielsweise die Umwälzpumpe so dimensioniert, dass der Pfanneninhält etwa achtmal je Stunde umgesetzt werden kann. Trotzdem wird dadurch nicht gewährleistet, dass jedes Würzeteilchen achtmal den Kocher durchläuft. Insbesondere in den unteren und Eckbereichen der Würzepfanne ist keine ausreichende Zirkulation gewährleistet.

Insbesondere ergeben sich hier Probleme beim Phasenkochen, was Voraussetzung ist für ein energiesparendes Würzekochen. Beim Phasenkochen wird beispielsweise die Leistung der Umwälzpumpe und/oder die Heizleistung des Kochers während des Aufheiz- und Kochprozesses geregelt und einer Sollwertkurve angepasst, wie beispielsweise in der EP 0875559 B1 erläutert wird. Hier wird also der Kochprozess in verschiedenen Phasen durchgeführt, wobei die Heizleistung des Würzekochers abhängig von einer Differenz zwischen Soll- und Istwert ist. Insbesondere in den Phasen, in denen die Heizleistung gering ist oder aber gar nicht geheizt wird, ergibt sich das Problem, dass der Pfanneninhalt nicht ausreichend umgewälzt wird, da durch die herabgesetzte Heizleistung die Entspannungsenergie der aufgeheizten Würze nicht ausreichend ist, um für eine gute Zirkulation zu sorgen.

Insgesamt ist bei den bekannten Würzepfannen und Würzekochverfahren eine hohe Pumpleistung nötig, die zu einer Durchlaufgeschwindigkeit von ca. 2 bis 3 m/sek. in den Außenkocherrohren führt, da es sonst zu Verkrustungen kommt.

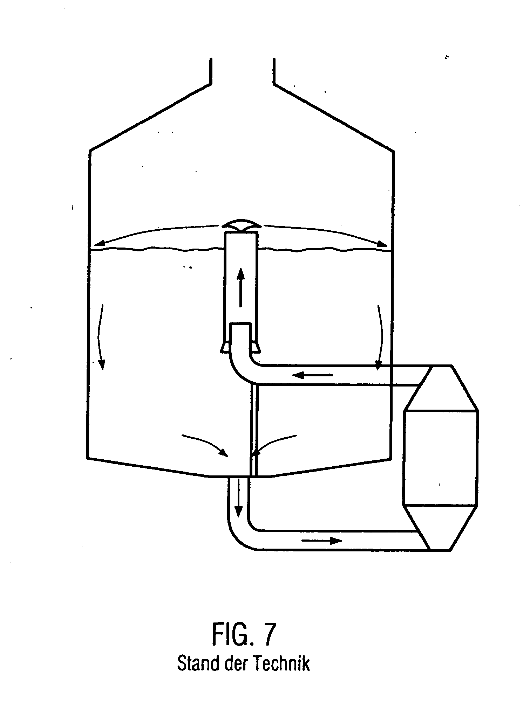

Es wurde auch bereits vorgeschlagen, wie in der Figur 7 dargestellt ist, dass die von einem Außenkocher erhitzte Würze durch ein Einlaufrohr, das in ein Steigrohr ragt, zugeführt wird. Auch bei diesem System hat sich jedoch gezeigt, dass es insbesondere beim Phasenkochen zu keiner ausreichenden Zirkulation der Würze kommt.

Hiervon ausgehend liegt der vorliegenden Erfindung die Aufgabe zugrunde, eine Würzepfanne und ein entsprechendes Verfahren bereitzustellen, die eine verbesserte Zirkulation der Würze in der Würzepfanne, selbst beim Phasenkochen ermöglichen.

Erfindungsgemäß wird diese Aufgabe durch die Merkmale der Ansprüche 1 und 13 gelöst.

Da gemäß der vorliegenden Erfindung zwischen Einlaufrohr und Steigrohr mindestens eine Ansaugöffnungvorgesehen ist, die die Würze aus einem Würzevorrat der Würzepfanne selbständig ansaugt, kann die Würze aus dem Würzevorrat zusammen mit der vom Außenkocher erhitzten Würze vom Pfannenboden nach oben steigen und zum oberen Ende des Steigrohrs auf die Oberfläche des Würzevorrats herab laufen, so dass eine ausreichende Zirkulation der Würze im Würzevorrat gewährleistet ist. Die erfindungsgemäße Würzepfanne weist somit zwei Zirkulierkreisläufe auf, wobei einerseits Würze aus dem Würzevorrat dem Außenkocher zugeführt und die erhitzte Würze dem Würzevorrat erneut über das Einlaufrohr und das Steigrohr zugeführt wird, und andererseits in einem weiteren Kreislauf Würze aus dem Würzevorrat über die mindestens eine Ansaugöffnung zusammen mit der erhitzten Würze nach oben steigt. Das Ansaugen erfolgt unter anderem aufgrund des statischen Unterdrucks in der durch die Steigleitung strömenden Flüssigkeit sowie aufgrund der Expansion der erhitzten Würze.

Durch die verbesserte Zirkulation in der Würzepfanne kann daher auch die Pumpleistung einer Zirkulationspumpe herabgesetzt werden, die Würze aus dem Würzevorrat dem Außenkocher zuführt, die dann wiederum der Würzepfanne zugeführt wird, und dabei die Heizleistung herabgesetzt werden.

Gemäß der Erfindung können somit auch besonders gut unerwünschte aromatische Komponenten und insbesondere DMS ausgetrieben werden.

Gemäß der Erfindung vergrößert sich die Querschnittsfläche des Steigrohrs oberhalb der mindestens einen Ansaugöffnung nach oben hin zumindest abschnittsweise. Durch die Erweiterung der Steigleitung kann so die aufsteigende Würze expandieren, was die Zirkulation der Würze aus dem Würzevorrat in die Ansaugöffnungen weiter begünstigt. Durch die Zirkulation ist eine noch bessere Umwälzung möglich, insbesondere bei nicht beheizten Phasen, wenn es keine ausreichende thermische Entspannungsenergie gibt.

Gemäß der Erfindung grenzt das obere Ende des Einlaufrohrs an den unteren Endbereich des Steigrohrs und zwar derart, dass die mindestens eine Ansaugöffnung zwischen dem Einlaufrohr und dem Steigrohr gebildet wird. Dass das Einlaufrohr an den unteren Endbereich des Steigrohrs angrenzt kann bedeuten, dass das obere Ende des Einlaufrohrs und das untere Ende des Steigrohrs im Wesentlichen in einer Ebene liegen. Es kann jedoch auch bedeuten, dass das obere Ende des Einlaufrohrs geringfügig in den unteren Endbereich des Steigrohrs ragt oder geringfügig beabstandet ist. So ist die mindestens eine Ansaugöffnung zwischen dem unteren Ende des Steigrohrs und der Au-βenwand des Einlaßrohrs bzw. dem seitlichen Endbereich gebildet.

Vorteilhafterweise weist das Steigrohr am unteren Ende einen sich nach unten erweiternden Kragen auf, d.h., dass der erweiternde Kragen das Einlaufrohr im oberen Bereich umgibt.

Vorteilhafterweise weist das Steigrohr einen sich nicht erweiternden unteren Abschnitt, beispielsweise einen zylindrischen Abschnitt und einen oberen Abschnitt, dessen Querschnittsfläche sich zum oberen Ende des Steigrohrs vergrößert. Diese Anordnung bringt den Vorteil mit sich, dass die Würze, die durch die Ansaugöffnungen in das Steigrohr angesaugt wird, in den sich nicht erweiternden unteren Abschnitt mit hoher Geschwindigkeit strömen kann, was wiederum einen hohen dynamischen Druck mit sich bringt. Nach diesem Bereich folgt dann der sich erweiternde Abschnitt, in dem der dynamische Druck und somit die Strömungsgeschwindigkeit abnimmt, wobei die Würze expandiert. Die Kombination aus dem sich nicht erweiternden Abschnitt und dem sich erweiternden Abschnitt ermöglicht ein ideales Ansaugen der Würze aus dem Würzevorrat durch die mindestens eine Ansaugöffnung in das Steigrohr, auch wenn die Außenkochertemperatur niedrig ist.

Dabei ist der obere Abschnitt vorzugsweise als konisch zulaufendes Rohr ausgebildet, dessen Außenwandung unter einem Winkel β von 5 bis 15°, vorzugsweise 6 bis 10° zur Mittelachse L des Steigrohrs geneigt ist.

Dabei weist das Einlaufrohr in seinem oberen Ende eine geringere Querschnittsfläche auf als das untere Ende des Steigrohrs.

Es ist vorteilhaft, wenn das Verhältnis der Durchmesser D1 des Einlaufrohrs an seinem oberen Ende zu dem Durchmesser D2 am unteren Ende des Steigrohrs sich wie folgt verhält: D2/D1 ≅ 1,5 - 2,5, insbesondere D2/D1 ≅ 2.

Diese Anordnung stellt somit eine Düse dar, wobei vorzugsweise das Einlaufrohr an seinem oberen Ende einen konischen Düsenabschnitt aufweist. Eine solche Anordnung bringt ein besonders effizientes Ansaugen der Würze aus dem Würzevorrat in das Steigrohr mit sich. Durch den verringerten Querschnitt des Einlaufrohrs wird die Flussgeschwindigkeit der Würze erhöht, wobei aufgrund des niedrigen statischen Drucks Würze in das Steigrohr angezogen wird, wobei anschließend die Würze in der sich nach oben erweiternden Steigleitung expandiert. Insbesondere in Kombination mit der sich erweiternden Querschnittsfläche des Steigrohrs kann auch in nicht beheizten Phasen eine sehr gute Umwälzung erzielt werden. Eine Verkrustung des Außenkochers kann somit wirksam verhindert werden.

Es ist vorteilhaft, wenn das Steigrohr an seinem oberen Ende einen an seinem Umfang umlaufenden vorzugsweise ringförmigen Schirm aufweist. Dabei ist die Schirmfläche z.B. von dem oberen Ende des Steigrohrs nach unten geneigt. Somit kann die aus der Steigleitung bzw. dem Steigrohr nach oben austretende Würze seitlich umgelenkt werden, was die Oberfläche der Würze vergrößert, was letztendlich das Austreiben von unerwünschten Komponenten begünstigt. Dabei ist vorzugsweise oberhalb des Steigrohrs ein Leitkörper, der eine Prallfläche aufweist, vorgesehen. Die Würze kann dann über den Spalt zwischen Schirmfläche und Leitkörper austreten.

Der erfindungsgemäße Aufbau ermöglicht, dass die Steigleitung oder das Steigrohr über Befestigungselemente in einfacher Weise an dem Würzepfannenboden befestigt werden kann.

Vorzugsweise befinden sich die Ansaugöffnungen im unteren Dritten der Würzepfanne. Somit ist eine ausreichende Zirkulation auch in dem Bodenbereich und Bodeneckbereich der Würzepfanne möglich, so dass die Effektivität des Prozesses optimiert werden kann.

Die vorliegende Erfindung wird nachfolgend unter Bezugnahme der folgenden Zeichnungen näher erläutert. Dabei zeigt
- Fig. 1: schematisch einen Längsschnitt der Ausführungsform der vorliegenden Erfindung,
- Fig. 2: einen Längsschnitt eines Steigrohrs gemäß der vorliegenden Erfindung,
- Fig. 3: eine Aufsicht auf einen Schirm, der oben am Steigrohr angeordnet ist,
- Fig. 4a: schematisch einen Ausschnitt, der den Übergang zwischen Einlaufrohr und Steigrohr gemäß der vorliegenden Erfindung zeigt,
- Fig. 4b: schematisch den Übergang zwischen Einlaufrohr und Steigrohr gemäß der vorliegenden Erfindung,
- Fig. 4c: schematisch den Übergang zwischen Einlaufrohr und Steigrohr,
- Fig. 5: schematisch die Würzepfanne mit Außenkocher,
- Fig. 6: den in Fig. 4a gezeigten Ausschnitt mit entsprechender Bemaßung,
- Fig. 7: eine Würzepfanne gemäß dem Stand der Technik.

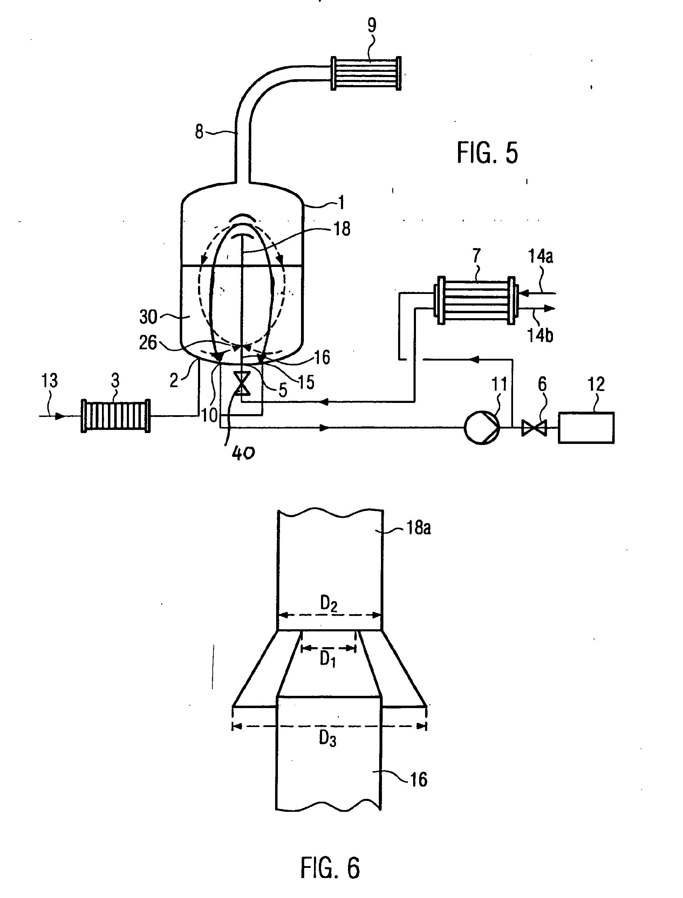

Fig. 5 zeigt die erfindungsgemäße Würzepfanne 1, die einen Zulauf für Würze 2 aufweist. Der Würzepfanne wird über den Zulauf 2 aus dem Läuterbottich oder einem Vorlauftank (nicht dargestellt) über die Leitung 13 und eine optional vorgesehene Würzeaufheizvorrichtung 3 Würze zum Kochen zugeführt. Die Würzepfanne weist hier einen Au-βenkocher 7 auf. Der Außenkocher 7 ist beispielsweise ein Rohrbündelwärmetauscher oder ein Plattenwärmeüberträger. Die Größe und Leistung des Außenkochers 7 kann in Abhängigkeit des Würzevolumens in der Würzepfanne 1 und des gewünschten Kochprozesses frei gewählt werden, da die Größe des Außenkochers 7 nicht auf den in der Würzepfanne vorhandenen Platz beschränkt ist, wie es beispielsweise bei Würzepfannen mit Innenkocher der Fall ist. Der Außenkocher 7 wird hier durch Heißdampf oder Hochdruckheißwasser betrieben und weist dafür eine Zuleitung 14a und eine Rückleitung 14b auf. Der Außenkocher 7 wird durch eine nicht dargestellte Steuerung angesteuert, so dass die Würze phasenweise mit unterschiedlicher Leistung beheizt werden kann. Die Würzepfanne 1 weist mindestens einen Würzeauslass 10, 15 auf, der hier im Pfannenboden vorgesehen ist. Der Würzeauslass 10, 15 befindet sich vorzugsweise im Pfannenboden 23, auf jeden Fall jedoch unterhalb der Oberfläche des Würzevorrats 30.

In diesem Ausführungsbeispiel gibt es den Würzeauslass 10 und den Würzeauslass 15, die beide zusammengeführt werden.

Über den Würzeauslass 10, 15 wird mittels der Pumpe 11, vorzugsweise mit Frequenzumformer ausgestattet, die Würze aus dem Würzevorrat 30 dem Außenkocher 7 zugeführt.

Die Würze, die durch den Außenkocher 7 gelaufen ist und in der beheizten Phase von dem Außenkocher 7 beispielsweise auf eine Temperatur von über 100°C aufgeheizt wurde, wird über eine weitere Leitung der Würzezuführung 5 in der Würzepfanne 1 zugeleitet und steigt dort, wie nachfolgend noch näher erläutert wird, über das Einlaufrohr 16 und das Steigrohr18 in der Würzepfanne 1 nach oben und gelangt über das obere Ende des Steigrohrs18 auf die Oberfläche des Würzevorrats 30. Aus dem Würzevorrat 30 kann die Würze dann wieder, wie zuvor beschrieben, über den Würzeauslass 10, 15 dem Außenkocher 7 im Kreislauf zugeführt werden. Weiter kann über den Würzeauslass 10, 15die fertig gekochte Würze mittels der Pumpe 11 durch Schalten des Ventils 6 beispielsweise einem Whirlpool zur Heißtrubabscheidung zugeführt wird. Am oberen Ende, d.h. dem Ablauf entgegengesetzten Ende, weist die Würzepfanne 1 ein Dunstrohr 8 auf, durch das der entstehende Brüden abgeleitet und beispielsweise einem Brüdenkondensator 9 zuführt wird.

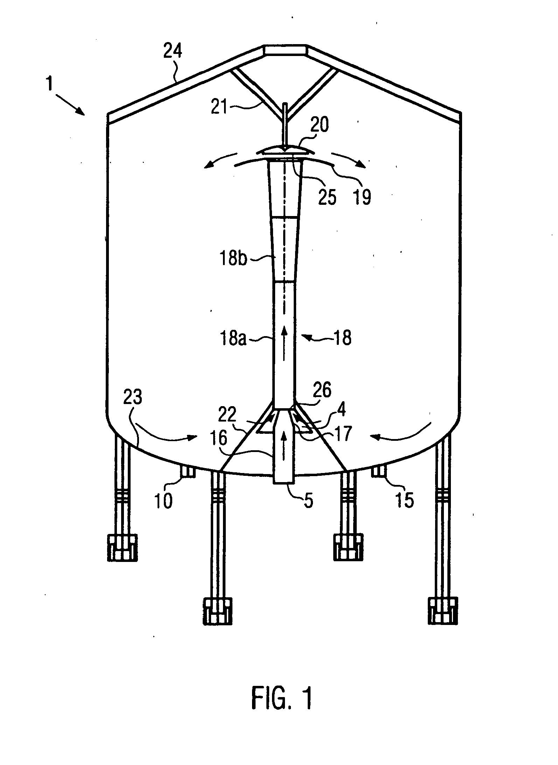

In der Fig. 1 sind die Würzepfanne 1 sowie das Einlass- und Steigrohr 16, 18 besser zu erkennen. Die Würzezuführung 5, die von dem Außenkocher 7 erhitzte Würze erneut der Würzepfanne 1 zuführt, ist mit dem Einlassrohr 16, 18 verbunden. Hier ist die Würzezuführung 5 bzw. das Einlaufrohr im Pfannenboden angeordnet, kann aber genauso gut in der Pfannenseitenwand angeordnet sein. Die Würzezuführung sollte jedoch so angeordnet sein, dass die Ansaugöffnung 26 im Wesentlichen im unteren Drittel der Pfanne angeordnet ist. In diesem Ausführungsbeispiel ist die Steigleitung zweiteilig ausgebildet, was jedoch nicht zwangsläufig notwendig ist. Das Einlaufrohr 16 und das Steigrohr 18 sind hier zentrisch angeordnet. Das Einlaufrohr 16 ist im Würzepfanneboden 23 befestigt. Das Steigrohr 18 ist über Halterungen 22 ebenfalls an dem Pfannenboden 23 befestigt.

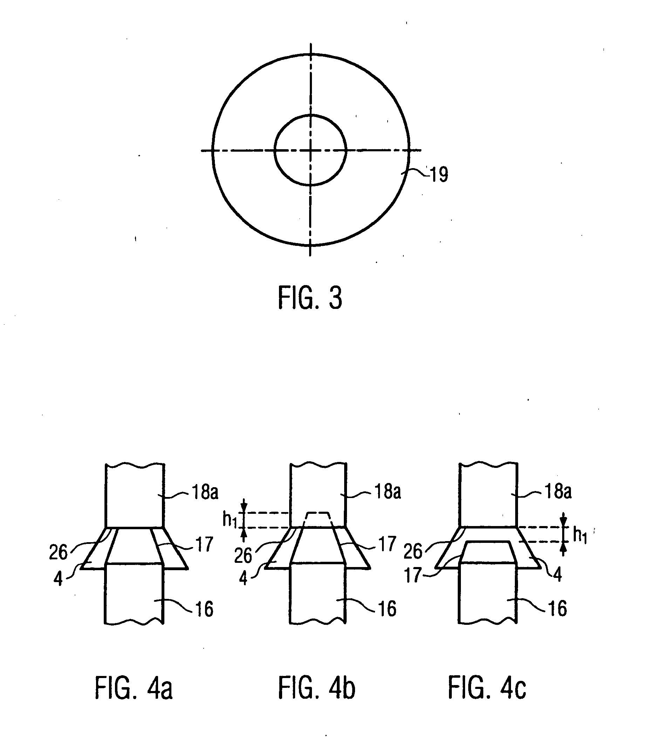

Bei dieser Ausführungsform grenzt das Einlaufrohr 16 an den unteren Endbereich des Steigrohrs 18, wie beispielsweise auch aus Fig. 4a und Fig. 4c hervorgeht. Hier hat das Einlaufrohr 16 an seinem oberen Ende eine geringere Querschnittsfläche als das Steigrohr 18 an seinem unteren Ende. An das untere Ende des Steigrohrs 18a ist an sich nach unten erweiternder seitlich geschlossener Kragen 4 vorgesehen. Das Einlaufrohr 16 ragt in den Kragen 4 bzw. die Manschette 4 hinein. Wie besser aus Fig. 6 ersichtlich ist, weist das Einlaufrohr 16 an seinem oberen Ende, d.h. hier an seiner oberen Endkante, einen Durchmesser D1 auf und das Steigrohr 18 weist an seinem unteren Ende bzw. hier im gesamten Abschnitt 18a einen Durchmesser D2 auf, wobei das Verhältnis der Durchmesser des Einlaufrohrs an seinem oberen Ende D1 zu dem Durchmesser D2 am unteren Ende des Steigrohrs sich wie folgt verhält: D2/D1 ≅ 1,5 bis 2,5, insbesondere D2/D1 ≅ 2. Der Durchmesser D3 des Kragens 4 an seinem dem Einlauf 5 zugewandten Ende ist mit D3 bezeichnet, wobei das Verhältnis von D3/D2 in einem Bereich von 1,5 bis 2,5, vorzugsweise ≅ 2 liegt.

In Fig. 4a liegen das obere Ende, d.h. hier die obere Endkante des Einlaufrohrs 16 und das untere Ende, d.h. beispielsweise die Unterkante des Steigrohrs 18a, im Wesentlichen in einer Ebene. Das obere Ende des Einlaufrohrs 16 kann jedoch auch geringfügig in das Steigrohr 18 in den unteren Bereich ragen, wie dies in Fig. 4b gezeigt ist oder aber von diesem geringfügig nach unten beabstandet sein, wie in Fig. 4c gezeigt ist. Dabei kann das Einlaufrohr 16 beispielsweise um eine Strecke h₁ in das Steigrohr 18 ragen, wobei h₁ < D1 ± 10% ist. Dies gilt auch für den Abstand h₁ wie er in Figur 4c gezeigt ist, zwischen unterem Ende des Steigrohrs 18 und dem oberen Ende bzw. der oberen Endkante des Einlaufrohrs 16. Das Einlaufrohr 16 darf jedoch nicht weiter in das Steigrohr 18 ragen oder beabstandet sein, da sonst die Ansaugfunktion des Steigrohrs, wie nachfolgend noch näher erläutert wird, nicht mehr gewährleistet ist.

In dieser Ausführungsform weist das Einlaufrohr 16 an seinem oberen Ende einen konisch zulaufenden Düsenabschnitt 17 auf, so dass durch Verengung des Querschnitts die Geschwindigkeit der durchströmenden Würze, bzw. der dynamische Druck zunimmt und der statische Druck abnimmt. Zwischen dem unteren Ende des Steigrohrs 18 und dem oberen Ende bzw. der Außenwand des Einlaufrohrs 16 bildet sich so mindestens eine Ansaugöffnung 26, die hier ringförmig ausgebildet ist, aus. Über die Ansaugöffnung 26 kann aufgrund des niedrigen statischen Druckes Würze aus dem Würzevorrat 30 in das Steigrohr 18 selbständig angesaugt werden, wie durch die Pfeile in Fig. 1 und 5 gezeigt ist. Die angesaugte Würze steigt dann zusammen mit der vom Außenkocher 7 erhitzten Würze, wie durch den Pfeil in Fig. 1 dargestellt ist, im Steigrohr 18 nach oben.

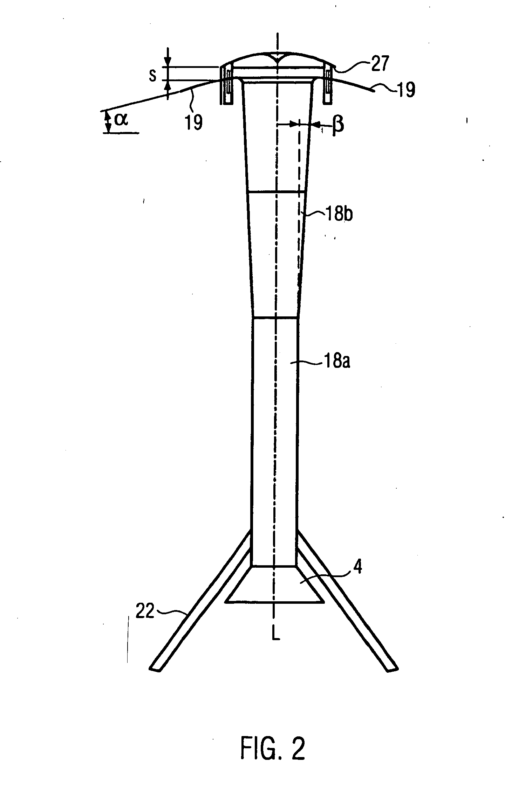

Das Steigrohr 18 ist hier so ausgebildet, dass es sich zumindest abschnittsweise nach oben, d.h. in Steigrichtung der Würze erweitert. Hier weist das Steigrohr 18 erst einen zylindrischen Abschnitt 18a auf, an den sich, wie aus Fig. 2 deutlich wird, ein sich konisch erweiternder Abschnitt 18b anschließt, dessen Querschnittsfläche sich zum Ende des Steigrohrs 18 hin vergrößert. In dem sich nicht erweiternden Abschnitt 18a des Steigrohrs ist der dynamische Druck der aufsteigenden Würze groß und somit auch die Fließgeschwindigkeit. Der Abschnitt 18a kann somit auch als Geschwindigkeitsbereich bezeichnet werden. Der obere Abschnitt 18b ist hier als konisch zulaufendes um die Längsachse L rotationssymmetrisches Rohr ausgebildet, dessen Außenwandung unter einem Winkel β von 5 bis 15°, vorzugsweise 6 bis 10° zur Mittelachse L geneigt ist, wie aus Figur 2 deutlich wird. Die Erweiterung des Steigrohrs 18 oberhalb der Ansaugöffnungen 26 bringt den Vorteil mit sich, dass die aufsteigende Würze expandieren kann, was wiederum die Zirkulation, d.h. das Ansaugen der Würze, begünstigt. Die Längen der Abschnitte 18a und 18b sind vorzugsweise wesentlich gleich und weichen höchstens um 25% - 50% voneinander ab.

Am oberen Ende des Steigrohrs 18 ist, wie insbesondere aus Fig. 2 und 3 hervorgeht, ein ringförmiger Schirm 19 um das Steigrohr 18 angeordnet. Der Schirm ist vorzugsweise ringförmig am Umfang des Steigrohrs angeordnet. Die Schirmfläche ist von dem oberen Ende des Steigrohrs 18 aus nach unten um einen Winkel α = 10 bis 40°, vorzugsweise 20 bis 30° zur Horizontalen geneigt. Dem Steigrohr 18 gegenüberliegend ist der Leitkörper 20 angeordnet, der eine im Wesentlichen konkave Drallfläche 29 aufweist.
Der Leitkörper 20 ragt seitlich bis in den Bereich des Schirms 19, so dass zwischen dem Leitkörper 20 und dem Schirm 19 der Austrittsspalt S gebildet wird, durch den die Würze nach außen geleitet wird. Der Spalt ist in diesem Ausführungsbeispiel ringförmig. Die Spalthöhe kann beispielsweise über die in Fig. 2 gezeigte Vorrichtung insbesondere Stellschraubvorrichtungen 27 verstellt werden. Somit kann die Würze als dünner Film nach außen geleitet werden und von oben auf die Oberfläche des Würzevorrats 30 auftreffen. Durch die vergrößerte Oberfläche können unerwünschte Stoffe beispielsweise DMS entfernt werden. Der Leitkörper 20 ist über eine Befestigung 21 am oberen Teil der Würzepfanne 1 vorzugsweise an der Haube 24 angeordnet.

Die Ansaugöffnungen 26 sind vorzugsweise im unteren Drittel der Würzepfanne 1 angeordnet, so dass eine ausreichende Zirkulierung der Würze im unteren Bereich der Würzepfanne möglich ist. Wie durch die Pfeile dargestellt wird, kann Würze insbesondere auch aus den unteren Eckbereichen der Würzepfanne 1 von den Ansaugöffnungen 26 angesaugt werden. In diesem Zusammenhang ist es insbesondere vorteilhaft, dass auch der Würzeauslass 10, 15 im unteren Bereich, d.h. hier im Pfannenboden 23 vorgesehen ist, so dass die Würzepfanne 1 auch bei kleinen Würzevolumina bzw. kleinen Suden verwendet werden kann.

Wie aus Figur 5 hervorgeht, ist vor dem Einlass 5 ein Stellventil 40 vorgesehen. Über dieses Stellventil kann die Geschwindigkeit bzw. der Druck der aufsteigenden Würze eingestellt werden, so dass die Geschwindigkeit der Würze etwa bei 2 bis 3 m/sek. liegt. Auf jeden Fall muss der Druck der aufsteigenden Würze mindestens dem Sättigungsdampfdruck der Würze entsprechen, der mit der Temperatur der vom Außenkocher 7 erhitzten Würze korrespondiert, plus dem statischen Druck der Würze oberhalb des Ventils 40, d.h. im Steigrohr und Einlaufrohr entsprechen.

Nachfolgend wird das erfindungsgemäße Verfahren für die in Zusammenhang mit Fig. 1 bis 5 gezeigte Würzepfanne näher erläutert.

Zunächst kann die zu kochende Würze über eine Leitung 13 von einem Läuterbottich oder einem Vorlauftank aus zu einer Würzeaufheizvorrichtung 3 geleitet werden, die die Würze vorwärmt. Die Würze muss jedoch nicht vorgewärmt werden. Die Würze wird dann über einen Zulauf 2 in die Würzepfanne 1 eingeleitet, bis ein gewisser Würzevorrat 30 in der Würzepfanne 1 gelagert ist. Aus der Würzepfanne 1 wird aus dem Würzevorrat 30 über den Würzeauslass 10, 15 und die Pumpe 11 (Ventil 6 geschlossen) Würze in den Außenkocher 7 geleitet, wo sie auf Temperaturen von über 100°, vorzugsweise 101 -104°C erhitzt wird. Die vom Außenkocher 7 erhitzte Würze wird dann erneut der Würzepfanne 1 von unten über die Würzezuführung 5 zugeführt. Dabei passiert die vom Au-βenkocher erhitzte Würze das Einlaufrohr 16 und steigt, wie in Fig. 1 gezeigt, in Pfeilrichtung nach oben. Aufgrund des konisch zulaufenden Düsenabschnitts 17 des Einlaufrohrs 16 wird aufgrund der Querschnittsverengung die Fließgeschwindigkeit der Würze erhöht, derart, dass der dynamische Druck steigt und der statische Druck sinkt. Die Würze passiert den konischen Düsenabschnitt 17 und steigt in das Steigrohr 18 auf. Aufgrund des niedrigen statischen Drucks der strömenden Flüssigkeit wird Würze aus dem Würzevorrat 30, wie durch die gestrichelten Pfeile in Fig. 1 gezeigt, durch die Ansaugöffnung 26 selbständig in das Steigrohr 18 angesaugt. Somit kommt die Würze auch im unteren Bereich der Würzepfanne 1 in Bewegung und zirkuliert. Die angesaugte Würze steigt dann mit der von dem Außenkocher 7 erhitzten Würze zusammen im Steigrohr 18, z.B. zunächst im zylindrisch ausgebildeten Abschnitt 18a, und dann im sich nach oben erweiternden Abschnitt 18b nach oben. Dadurch, dass sich das Steigrohr 18 in Steigrichtung nach oben erweitert, kann die erhitzte Würze im Steigrohr 18 weiter expandieren, was wiederum die Zirkulation der Würze begünstigt. Am oberen Ende des Steigrohrs 18 prallt die Würze auf den Leitkörper 20 und wird durch den Spalt S, der zwischen Leitkörper bzw. Leitschirm 20 und Schirm 19 ausgebildet ist, seitlich nach unten geleitet, wobei die Oberfläche der austretenden Flüssigkeit vergrößert ist, was wiederum das Ausdampfen von unerwünschten Aromakomponenten, z.B. DMS begünstigt. Die Würze läuft dann nach unten und fällt auf die Oberfläche des Würzevorrats 30. Somit ergeben sich zwei Kreisläufe, wie insbesondere in Fig. 5 gezeigt ist. In einem Kreislauf zirkuliert die Würze über den Auslass 10, 15 den Außenkocher 7, der Würzezuführung 5 und der Steigleitung 16, 17 sowie den Würzevorrat 30 im Kreislauf, wie durch die durchgehenden Pfeile dargestellt.

Andererseits ergibt sich ein weiterer Kreislauf, der in Fig. 5 gestrichelt dargestellt ist, wobei Würze über die mindestens eine Ansaugöffnung 26 in das Steigrohr 18 angesaugt wird, nach oben steigt, wieder dem Würzevorrat 30 zugeführt wird und erneut über die Ansaugöffnung 26 angesaugt wird.

Dieses Prinzip bringt den Vorteil mit sich, dass insbesondere im unteren Bodenbereich der Würzepfanne eine ausreichende Zirkulation der Würze gewährleistet ist. Die geschickte Anordnung und der vorteilhafte Aufbau der Steigleitung, d.h. des Steigrohrs und des Einlaufrohrs bringt darüber hinaus den Vorteil mit sich, dass auch in nicht beheizten Phasen, d.h. wenn die Würze über den Würzeauslass 10, 15 über die Pumpe 11 abgezogen wird, jedoch nicht oder nur mäßig beheizt wird und dann wieder über das Einlaufrohr 16 zugeführt wird, eine ausreichende Zirkulierung in der Würzepfanne 1 realisiert werden kann, auch wenn keine große thermische Entspannungsenergie vorhanden ist. Insgesamt kann durch die vorliegende Erfindung die Pumpleistung, die Heizleistung und auch die Prozessdauer optimiert werden.

Da zwischen 2 bis 4 % des Würzevolumens verdampft, kann der Brüdendampf über das Dunstrohr 8 abgeleitet und einem Kondensator 9 zugeführt werden.

In diesem Ausführungsbeispiel wurde die Würzepfanne mit einer Steigleitung beschrieben, die zweiteilig ausgebildet ist. Es ist jedoch auch möglich, die Steigleitung einteilig mit entsprechenden Ansaugöffnungen 26 auszubilden. In der Ausführungsform, wie sie in Fig. 1 und 2 gezeigt ist, weist das Steigrohr 18 einen zylinderförmigen Abschnitt 18a und einen oberhalb des zylindrischen Abschnitts 18a angeordneten, sich konisch erweiternden Abschnitt 18b auf. Wesentlich ist, dass Würze im Steigrohr nach oben hin expandieren kann, wobei in diesem Ausführungsbeispiel im Abschnitt 18a eine Geschwindigkeitserhöhung erfolgt und im Abschnitt 18b die Geschwindigkeit durch Volumenvergrößerung reduziert wird.

## Patentansprüche

1. Würzepfanne (1) mit
einem außerhalb der Würzepfanne (1) angeordneten Außenkocher (7), der im Kreis-lauf Würze aus der Würzepfanne (1) erhitzt, wobei die erhitzte Würze der Würzepfanne (1) erneut zugeführt wird,
einem Einlaufrohr (16) sowie einem über dem Einlaufrohr (16) angeordneten Steigrohr (18), durch die vom Außenkocher (7) erhitzte Würze in der Würzepfanne (1) nach oben steigt,
wobei das obere Ende des Einlaufrohrs (16) an den unteren Endbereich des Steigrohrs (18) derart angrenzt, dass mindestens eine Ansaugöffnung (26) zwischen dem Einlaufrohr (16) und dem Steigrohr (18) gebildet wird, zum Ansaugen von Würze aus einem Würzevorrat (30) der Würzepfanne, und
sich die Querschnittsfläche des Steigrohrs (18) zumindest abschnittsweise zum obe-ren Ende des Steigrohrs (18) hin vergrößert.

2. Würzepfanne nach Anspruch 1, **dadurch gekennzeichnet, dass** am unteren Ende des Steigrohrs (18) ein sich nach unten erweiternder Kragen (4) vorgesehen ist.

3. Würzepfanne nach Anspruch 1 oder 2, **dadurch gekennzeichnet, dass** das Steigrohr (18) einen sich nicht erweiternden unteren Abschnitt (18a) aufweist und einen oberen Abschnitt (18b), dessen Querschnittsfläche sich zum oberen Ende des Steigrohrs (18) vergrößert.

4. Würzepfanne nach Anspruch 3, **dadurch gekennzeichnet, dass** der obere Abschnitt (18b) als konisch zulaufendes Rohr ausgebildet ist, dessen Außenwandung unter einem Winkel β von 5 bis 15°, vorzugsweise 6 bis 10° zur Mittelachse L geneigt ist.

5. Würzepfanne nach mindestens einem der Ansprüche 1 bis 4, **dadurch gekennzeichnet, dass** das Einlaufrohr (16) an seinem oberen Ende eine geringere Querschnittsfläche aufweist als das untere Ende des Steigrohrs (18).

6. Würzepfanne nach Anspruch 5, **dadurch gekennzeichnet, dass** das Verhältnis der Durchmesser (D1) des Einlaufrohrs (16) an seinem oberen Ende zu dem Durchmesser (D2) am unteren Ende des Steigrohrs (D2) sich wie folgt verhält: D2/D1 ≅ 1,5 bis 2,5, insbesondere D2/Dl ≅ 2.

7. Würzepfanne nach einem der Ansprüche 1 bis 6, **dadurch gekennzeichnet, dass** das Einlaufrohr (16) einen zu seinem oberen Ende hin zulaufenden konischen Düsenabschnitt (17) aufweist.

8. Würzepfanne nach mindestens einem der Ansprüche 1 bis 7, **dadurch gekennzeichnet, dass** die mindestens eine Ansaugöffnung (26) im unteren Drittel der Würzepfanne angeordnet ist.

9. Würzepfanne nach mindestens einem der vorhergehenden Patentansprüche, **dadurch gekennzeichnet, dass** die Steigleitung (16, 18) an dem oberen Ende einen an ihrem Umfang umlaufenden Schirm (19) aufweist.

10. Würzepfanne nach Anspruch 9, **dadurch gekennzeichnet, dass** der Schirm (19) eine ringförmige Schirmfläche aufweist, die von dem oberen Ende der Steigleitung (16, 18) aus nach unten geneigt ist.

11. Würzepfanne nach mindestens einem der Ansprüche 1 bis 10, **dadurch gekennzeichnet, dass** oberhalb der Steigleitung (18, 16) ein Leitkörper (20) angeordnet ist.

12. Würzepfanne nach mindestens einem der Ansprüche 1 bis 11, **dadurch gekennzeichnet, dass** das Steigrohr (18) über Befestigungselemente (22) an dem Würzepfanneboden (23) befestigt ist.

13. Verfahren zum Würze kochen mit einer Würzepfanne (1), wobei Würze aus der Würzepfanne (1) im Kreislauf von einem Außenkocher (7) erhitzt wird und die erhitzte Würze der Würzepfanne (1) erneut zugeführt wird,
die vom Außenkocher (7) erhitzte Würze durch ein Einlaufrohr (16) und ein darüber ange-ordnetes Steigrohr (18) in der Würzepfanne (1) nach oben steigt und vom oberen Ende des Steigrohrs (18) zu einem Würzevorrat (30) in der Würzepfanne herabläuft,
Würze aus dem Würzevorrat (30) über mindestens eine Ansaugöffnung (26) zwischen Einlaufrohr (16) und Steigrohr 18 selbständig in die Steigleitung (16) abgesaugt wird und mit der vom Außenkocher erhitzten Würze nach oben steigt, wobei die aufsteigende Würze im sich zumindest abschnittsweise in seinem Querschnitt erweiternden Steigrohr (18) expandiert.

14. Verfahren nach Anspruch 13, **dadurch gekennzeichnet, dass** durch Verringerung der Querschnittsfläche des Einlaufrohrs (16) die Fließgeschwindigkeit der Würze erhöht und der statische Druck erniedrigt wird.

15. Verfahren nach Anspruch 13 oder 14, **dadurch gekennzeichnet, dass** die aufsteigende Würze im Steigrohr (18) zunächst einen Abschnitt (18a) durchströmt, der sich nicht erweitert, gefolgt von einem Abschnitt (18b), der sich zum oberen Ende des Steigrohrs hin erweitert.

## Claims

1. Wort copper (1), comprising
an external boiling vessel (7), which is disposed outside the wort copper (1) and which, in circulation, heats wort from the wort copper (1), the heated wort being fed back to the wort copper (1),
an inlet pipe (16), as well as a rising pipe (18), which is disposed above the inlet pipe (16) and through which wort heated by the external boiling vessel (7) rises upwards in the wort copper (1),
wherein the upper end of the inlet pipe (16) adjoins the lower end region of the rising pipe (18) in such a way that between the inlet pipe (16) and the rising pipe (18) at least one suction opening (26) is formed, for sucking wort out of a wort store (30) of the wort copper, and
the cross-sectional area of the rising pipe (18), at least in some segments, enlarges in the direction of the upper end of the rising pipe (18).

2. Wort copper according to Claim 1, **characterized in that** at the lower end of the rising pipe (18) a collar (4) is provided, which widens in the downward direction.

3. Wort copper according to Claim 1 or 2, **characterized in that** the rising pipe (18) has a non-widening lower segment (18a) and an upper segment (18b), the cross-sectional area of which enlarges towards the upper end of the rising pipe (18).

4. Wort copper according to Claim 3, **characterized in that** the upper segment (18b) is configured as a conically tapered pipe, the outer wall of which is inclined at an angle β of 5 to 15°, preferably 6 to 10°, to the centre axis L.

5. Wort copper according to at least one of Claims 1 to 4, **characterized in that** the inlet pipe (16) has at its upper end a smaller cross-sectional area than the lower end of the rising pipe (18).

6. Wort copper according to Claim 5, **characterized in that** the ratio of the diameters (D1) of the inlet pipe (16) at its upper end to the diameter (D2) at the lower end of the rising pipe (D2) is as follows: D2/D1 ≅ 1.5 to 2.5, in particular D2/D1 ≅ 2.

7. Wort copper according to one of Claims 1 to 6, **characterized in that** the inlet pipe (16) has a conical nozzle segment (17) which tapers in the direction of its upper end.

8. Wort copper according to one of Claims 1 to 7, **characterized in that** the at least one suction opening (26) is disposed in the bottom third of the wort copper.

9. Wort copper according to one of the preceding patent claims, **characterized in that** the riser (16, 18) has at the upper end a shield (19) which runs round on its periphery.

10. Wort copper according to Claim 9, **characterized in that** the shield (19) has an annular shield surface, which is inclined downwards from the upper end of the riser (16, 18).

11. Wort copper according to at least one of Claims 1 to 10, **characterized in that** above the riser (18, 16) there is disposed a guide body (20).

12. Wort copper according to at least one of Claims 1 to 11, **characterized in that** the rising pipe (18) is fastened by fastening elements (22) to the wort copper bottom (23).

13. Process for boiling wort with a wort copper (1), wherein wort from the wort copper (1) is heated in circulation by an external boiling vessel (7) and the heated wort is fed back to the wort copper (1),
the wort heated by the external boiling vessel (7) rises upwards in the wort copper (1) through an inlet pipe (16) and an above-situated rising pipe (18) and runs down from the upper end of the rising pipe (18) to a wort store (30) in the wort copper,
wort from the wort store (30) is sucked automatically into the riser (16) via at least one suction opening (26) between the inlet pipe (16) and the rising pipe (18) and rises upwards with the wort heated by the external boiling vessel, whereupon the rising wort expands in the rising pipe (18) of, at least in segments, widening cross section.

14. Process according to Claim 13, **characterized in that**, through reduction of the cross-sectional area of the inlet pipe (16), the flow velocity of the wort is increased and the static pressure is lowered.

15. Process according to Claim 13 or 14, **characterized in that** the rising wort in the rising pipe (18) initially flows through a section (18a) which does not widen, followed by a section (18b) which widens in the direction of the upper end of the rising pipe.

## Revendications

1. Chaudière à moût (1) comprenant
une chaudière extérieure (7), disposée à l'extérieur de la chaudière à moût (1), qui chauffe en circuit du moût de la chaudière à moût (1), le moût chauffé étant renvoyé dans la chaudière à moût (1),
un tube d'admission (16) ainsi qu'un tuyau ascendant (18), disposé au-dessus du tube d'admission (16) et au travers duquel s'élève le moût, chauffé dans la chaudière extérieure (7), dans la chaudière à moût (1),
l'extrémité supérieure du tube d'admission (16) étant limitrophe à la zone extrême inférieure du tuyau ascendant (18) de telle sorte qu'au moins une ouverture d'aspiration (26) est formée entre le tube d'admission (16) et le tuyau ascendant (18), pour l'aspiration de moût d'une réserve de moût (30) de la chaudière à houblonner, et
l'aire de section du tuyau ascendant (18) augmentant, au moins par sections, en direction de l'extrémité supérieure du tuyau (18).

2. Chaudière à moût suivant la revendication 1, **caractérisée en ce qu'**un collet (4) s'élargissant vers le bas est prévu sur l'extrémité inférieure du tuyau ascendant (18).

3. Chaudière à moût suivant l'une des revendications 1 et 2, **caractérisée en ce que** le tuyau ascendant (18) présente une section inférieure (18a) sans élargissement et une section supérieure (18b), dont l'aire de section s'agrandit en direction de l'extrémité supérieure du tuyau ascendant (18).

4. Chaudière à moût suivant la revendication 3, **caractérisée en ce que** la section supérieure (18b) est configurée sous forme de tube se terminant en cône, dont la paroi extérieure est inclinée sous un angle β de 5 à 15°, de préférence de 6 à 10°, par rapport à l'axe médian L.

5. Chaudière à moût suivant l'une au moins des revendications 1 à 4, **caractérisée en ce que** le tube d'admission (16) présente sur son extrémité supérieure une aire de section plus faible que l'extrémité inférieure du tuyau ascendant (18).

6. Chaudière à moût suivant la revendication 5, **caractérisée en ce que** le rapport du diamètre (D1) du tube d'admission (16) à son extrémité supérieure sur le diamètre (D2) à l'extrémité inférieure du tuyau ascendant (D2) est le suivant : D2/D1 ≈ 1,5 à 2,5, en particulier D2/D1 ≈ 2.

7. Chaudière à moût suivant l'une des revendications 1 à 6, **caractérisée en ce que** le tube d'admission (16) présente une section de tuyère conique (17) se terminant en cône en direction de son extrémité supérieure.

8. Chaudière à moût suivant l'une au moins des revendications 1 à 7, **caractérisée en ce que** la au moins une ouverture d'aspiration (26) est disposée dans le tiers inférieur de la chaudière à moût.

9. Chaudière à moût suivant l'une au moins des revendications précédentes, **caractérisée en ce que** la conduite ascendante (16, 18) présente à l'extrémité supérieure un écran (19) entourant son pourtour.

10. Chaudière à moût suivant la revendication 9, **caractérisée en ce que** l'écran (19) présente une surface d'écran annulaire, inclinée vers le bas à partir de l'extrémité supérieure de la conduite ascendante (16, 18).

11. Chaudière à moût suivant l'une au moins des revendications 1 à 10, **caractérisée en ce qu'**un corps de guidage (20) est disposé au-dessus de la conduite ascendante (18, 16).

12. Chaudière à moût suivant l'une au moins des revendications 1 à 11, **caractérisée en ce que** le tuyau ascendant (18) est fixé sur le fond (23) de la chaudière à moût par l'intermédiaire d'éléments de fixation (22).

13. Procédé d'ébullition du moût comprenant une chaudière à moût (1), du moût de la chaudière (1) étant chauffé en circuit par une chaudière extérieure (7) et le moût chauffé étant renvoyé dans la chaudière à moût (1),
le moût chauffé par la chaudière extérieure (7) s'élevant dans la chaudière à houblonner (1) au travers d'un tube d'admission (16) et d'un tuyau ascendant (18) superposé et s'écoulant de l'extrémité supérieure du tuyau ascendant (18) en direction d'une réserve de moût (30) dans la chaudière à houblonner,
du moût de la réserve (30) étant aspiré spontanément dans la conduite ascendante (16) au travers d'au moins une ouverture d'aspiration (26) entre le tube d'admission (16) et le tuyau ascendant (18) et s'élevant avec le moût chauffé par la chaudière extérieure, le moût ascendant se détendant dans le tuyau ascendant (18) qui s'élargit au moins par sections dans sa section transversale.

14. Procédé suivant la revendication 13, **caractérisé en ce que** la vitesse d'écoulement du moût est accrue et la pression statique est abaissée par la réduction de l'aire de section du tube d'admission (16).

15. Procédé suivant l'une des revendications 13 et 14, **caractérisé en ce que** le moût ascendant dans le tuyau ascendant (18) balaye d'abord une section (18a), sans élargissement, suivie d'une section (18b) qui s'élargit en direction de l'extrémité supérieure du tuyau ascendant.
